(19) **Europäisches Patentamt**

**European Patent Office**

**Office européen des brevets**

(11) **EP 1 719 979 A1**

(12) **EUROPEAN PATENT APPLICATION**
published in accordance with Art. 158(3) EPC

(43) Date of publication:
08.11.2006 Bulletin 2006/45

(51) Int Cl.:
*G01F 1/66* (2006.01)   *G01F 7/00* (2006.01)

(21) Application number: 05710748.4

(22) Date of filing: 25.02.2005

(86) International application number:
PCT/JP2005/003198

(87) International publication number:
WO 2005/083372 (09.09.2005 Gazette 2005/36)

(84) Designated Contracting States:
CH DE FR GB IT LI

(30) Priority: 27.02.2004 JP 2004055246

(71) Applicant: Fuji Electric Systems Co., Ltd.
Tokyo 141-0032 (JP)

(72) Inventors:
• OHMURO, Yoshinori
Hino-shi,
Tokyo 191-8502 (JP)

• YAO, Hironobu,
FUJI ELECTRIC SYSTEMS CO., LTD.
Shinagawa-ku,
Tokyo 141-0032 (JP)
• YAMAMOTO, Toshihiro,
FUJI ELECTRIC SYSTEMS CO. LTD
Shinagawa-ku,
Tokyo 141-0032 (JP)

(74) Representative: Lucas, Phillip Brian
Lucas & Co.
135 Westhall Road
Warlingham, Surrey CR6 9HJ (GB)

(54) **ULTRASONIC FLOWMETER COMPATIBLE WITH BOTH OF PULSE DOPPLER METHOD AND PROPAGATION TIME DIFFERENCE METHOD, METHOD AND PROGRAM FOR AUTOMATICALLY SELECTING THE MEASUREMENT METHOD IN THE FLOWMETER, AND ELECTRONIC DEVICE FOR THE FLOWMETER**

(57) The reliability of a reception wave from a transducer is checked and when the reliability is determined to be insufficient, a method different from the current method is selected. The reliability is judged by calculating a value serving as an index of the reliability of the reception wave and checking whether the value is smaller than a predetermined set value. When the value is smaller than the set value, the reliability is judged to be insufficient. The values serving as an index of the reliability of the reception wave may be the amplitude of the reception wave, the ratio of the amplitude of the reception wave against a predetermined measurable amplitude value, the ratio of the power spectrum against a predetermined power value, the ratio of transmission wave amplitude against the maximum amplitude of the reception wave, the ratio of the power spectrum of the transmission frequency included in the reception wave and obtained by Fourier transform of the reception wave against a predetermined power value, and the like.

F I G. 4

## Description

## Technical Field

The present invention relates to a technology of switching measurement methods between a pulse Doppler method and a transit time method using an ultrasonic flowmeter capable of measuring a flow rate in both the pulse Doppler method and the transit time method.

## Background Art

A pulse Doppler method and a transit time method are well known as ultrasonic flow rate measuring methods.

The flow rate measurement in the pulse Doppler method applies the principle of a Doppler shift in which an ultrasonic pulse is emitted to a fluid to be measured, and the frequency of an ultrasonic echo wave reflected by a foreign substance such as bubbles existing in the fluid changes by the amount proportional to the velocity of flow. As compared with the transit time method, the pulse Doppler method is featured by high accuracy, quick response, excellent anti-bubble property, and the possibility of high accuracy even in skewed flow by providing plural stages of measurement lines. However, it has the problem that a correct measurement cannot be performed in a fluid containing few bubbles and/or particles, and the range of the measurable velocity of flow is limited. As a flow rate measurement technology in the pulse Doppler method, for example, the technology of the patent document-1 is well known.

On the other hand, in the transit time method, a pair of ultrasonic transducers are used to compare the ultrasonics transit time from upstream to downstream and the ultrasonics transit time from downstream to upstream, and calculate the velocity of flow and the flow rate. In this method, as compared with the pulse Doppler method, the flow rate of a liquid and pure water containing few bubbles and/or particles can be appropriately measured, and the range of the measurable velocity of flow is wide.

A conventional ultrasonic flowmeter has performed a measurement by the pulse Doppler method or the transit time method.

Thus, the above-mentioned methods have merits and demerits, but they serve as a complement to each other, and it is preferable if an ultrasonic flowmeter has hardware resources capable of measuring the flow rate using these two methods, and appropriately switching between them.

The present invention aims at providing an ultrasonic flowmeter, its method and program capable of applying both the pulse Doppler method and the transit time method capable of measuring a flow rate independent of the presence/absence of a reflection object such as bubbles, etc. of a fluid to be measured by automatically selecting either of them according to reception waves of both pulse Doppler method and transit time method.

Patent Document 1: Japanese Published Patent Application No.2000-97742.

## Disclosure of Invention

The method of selecting a measuring method according to the present invention uses an ultrasonic flowmeter capable of applying both a pulse Doppler method for a flow rate measurement and a transit time method for a flow rate measurement, selects one of the measuring methods, and includes: a determining step of determining the current measuring method; a determining step of determining the reliability of a reception wave; and a selecting step of selecting a measuring method different from the current measuring method when it is determined that the reliability of the reception wave is insufficient.

Otherwise, the method of selecting a measuring method according to the present invention uses an ultrasonic flowmeter capable of applying both a pulse Doppler method for a flow rate measurement and a transit time method for a flow rate measurement, selects one of the measuring methods, and includes: a determining step of determining the current measuring method; a determining step of determining the reliability of a reception wave; and a selecting step of selecting a measuring method different from the current measuring method when it is determined that the reliability of the reception wave is insufficient, and obtaining a value as an index of reliability of a reception wave relating to each of the pulse Doppler method and the transit time method, comparing values as the indexes of the measuring methods with each other, and selecting a measuring method having a larger value of the index when it is determined that the reliability of the reception wave is sufficient.

The present invention is not limited to the above-mentioned method of selecting a measuring method, but it can be configured as an ultrasonic flowmeter capable of applying both methods, an ultrasonic flowmeter capable of simultaneously applying both methods, or a program or a recording medium storing the program for directing these devices to execute the above-mentioned methods.

According to the methods, the devices, etc. of the present invention, in a system capable of applying the transit time method and the pulse Doppler method, the selection of the methods is automatically determined, adopting the merits of these methods, thereby performing a measurement of a flow rate independent of the presence/absence of a reflection object in a fluid to be measured. Since the intensity of a received ultrasonic wave, the power spectrum of the frequency, the phase variation, the normal detection rate of the flow velocity, etc. in each measuring method are appropriately observed, and a method to be used is automatically determined based on a predetermined threshold, the flow rate measurement fitting with a measurement condition can be performed with high accuracy.

## Brief Description of the Drawings

Fig. 1 shows the outline of the configuration of the ultrasonic flowmeter capable of performing a flow rate measurement capable of applying both pulse Doppler method and transit time method according to an embodiment of the present invention;
Fig. 2 shows the principle of the flow rate measurement according to the transit time method;
Fig. 3 shows the principle of the flow rate measurement according to the pulse Doppler method;
Fig. 4 is a flowchart of the switching operation according to the first embodiment of the present invention;
Fig. 5 is a flowchart of the switching operation performed in the pulse Doppler method as shown in Fig. 4; and
Fig. 6 is a flowchart of the switching operation according to the second embodiment of the present invention

## Best Mode for Carrying Out the Invention

The present invention is described below in detail by referring to the embodiments and the attached drawings. When the same component appears in a plurality of figures, the same reference numeral is assigned in the figures.

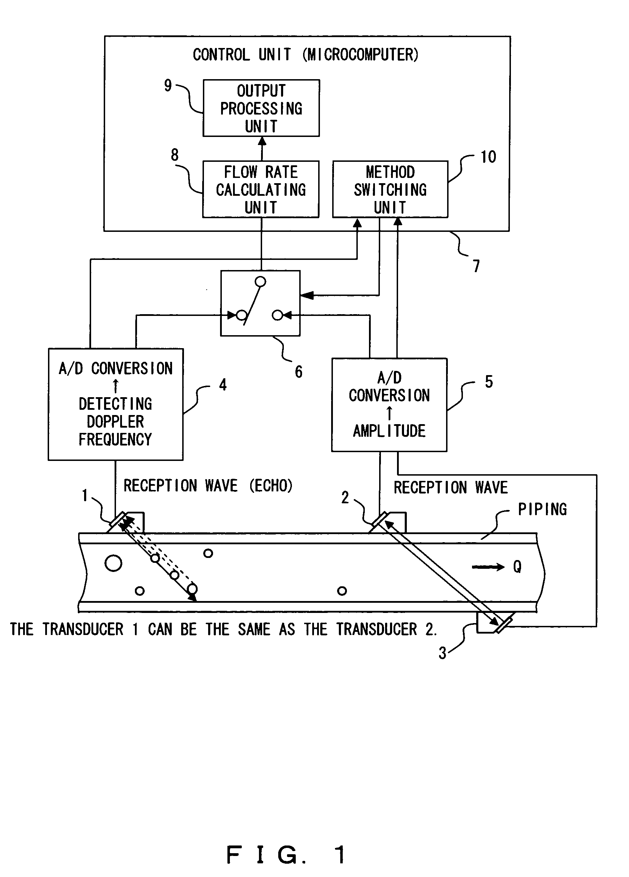

Fig. 1 shows the outline of the configuration of the ultrasonic flowmeter capable of performing a flow rate measurement capable of applying both pulse Doppler method and transit time method according to an embodiment of the present invention.

In Fig. 1, the ultrasonic flowmeter capable of applying the two methods is mounted on the outer wall of the piping for providing a flow path for the fluid to be measured, and is configured by a transducer 1 (ultrasonic transducer) for flow rate measurement in the pulse Doppler method for transmission and reception of ultrasonics, a pair of transducers 2 and 3 (ultrasonic transducers) attached opposite to each other on the outer wall of the piping, a circuit 4 for detecting a Doppler frequency and performing A/D conversion for a flow rate measurement in the pulse Doppler method, a circuit 5 for performing amplification and A/D conversion for a flow rate measurement in the transit time method, a switch circuit 6 for switching between the pulse Doppler method and the transit time method, and a control unit 7 for controlling the entire ultrasonic flowmeter. The detection of a Doppler frequency by the circuit 4 is performed practically by mixing the frequency of emitted ultrasonic pulses with the frequency of received echo and filtering a transmission frequency component, thereby extracting and outputting a signal indicating a Doppler shift component. Further in detail, it is the method of deriving an analysis signal by orthogonal detection. That is, the echo wave is multiplied by the sine and cosine components of a transmission frequency, the echo wave is separated into the components of a transmission frequency and a Doppler shift, and then only a signal indicating a Doppler shift component is extracted by a low pass filter and output.

Although not shown in the attached drawings, there is also a transmission circuit for outputting an ultrasonic pulse from each transducer by outputting a transmission pulse signal to each of the transducers. The transmission circuit is configured by, for example, a generator and an emitter. A generator generates an electric signal of a basic frequency f0, and an emitter outputs the electric signal in pulse form from the generator at each predetermined time interval (1/fprf). Thus, each transducer outputs the ultrasonic pulse of the basic frequency f0 at each predetermined time interval (1/fprf). Then, transmitting an ultrasonic pulse, and receiving and processing a reflected pulse by a reflection object or a pipe wall are defined as one measuring operation. The measuring operation is repeated a predetermined number of times (Nprf, for example, several hundred through several thousands times). Based on the obtained results, the control unit 7 obtains a Doppler reception wave fd(i) as conventionally, calculates the velocity of flow (that is, the flow profile) at each measurement point, and further calculates the flow rate. In the present method, a reception wave amplitude described later and a power spectrum are obtained to be compared with a set value (threshold), thereby determining the switch of a measuring method.

It is preferable that the control unit 7 is configured by a microcomputer formed by a CPU (central processing unit) not shown in the attached drawings, ROM (read-only storage device), RAM (arbitrary access storage device), etc. The control unit 7 performs the functions of each of a flow rate calculating unit 8 for calculating a flow rate by each method according to the signals from the circuit 4 in the pulse Doppler method and the circuit 5 in the transit time method, an output processing unit 9 for outputting (for example, displaying) a process result of the flow rate calculating unit 8, and a method switching unit 10 for switching the methods based on the principle of the present invention. Each of the processing units 8 through 10 is realized by the CPU not shown in the attached drawings reading and executing a predetermined program stored in the ROM also not shown in the attached drawings.

The flow rate measurement in the pulse Doppler method by the circuit 4 and the flow rate calculating unit 8 is performed by the existing method. Similarly, the flow rate measurement by the circuit 5 and the flow rate calculating unit 8 in the transit time method is performed by the existing method.

In Fig. 1, the method switching unit 10 switches the circuits 4 and 5. However, when the necessary hardware resources for both methods are individually provided, the flow rate measurements by the both methods can be concurrently performed. Therefore, switching the circuits 4 and 5 can be replaced with selecting one of the measurement results by the both methods.

Furthermore, the ultrasonic flowmeter capable of applying the two methods is individually provided with necessary hardware resources for both methods. However, the present invention can not be provided with the circuit 5 for the measurement by the transit time method, but the use of the amplifier (not shown in the attached drawings) of the circuit 4 and the A/D converter for the pulse Doppler method can be applied to the flow rate measurement in the transit time method in the ultrasonic flowmeter capable of applying the two methods.

Before explaining the method of switching the methods according to the present invention, the transit time method and the pulse Doppler method are briefly explained below.

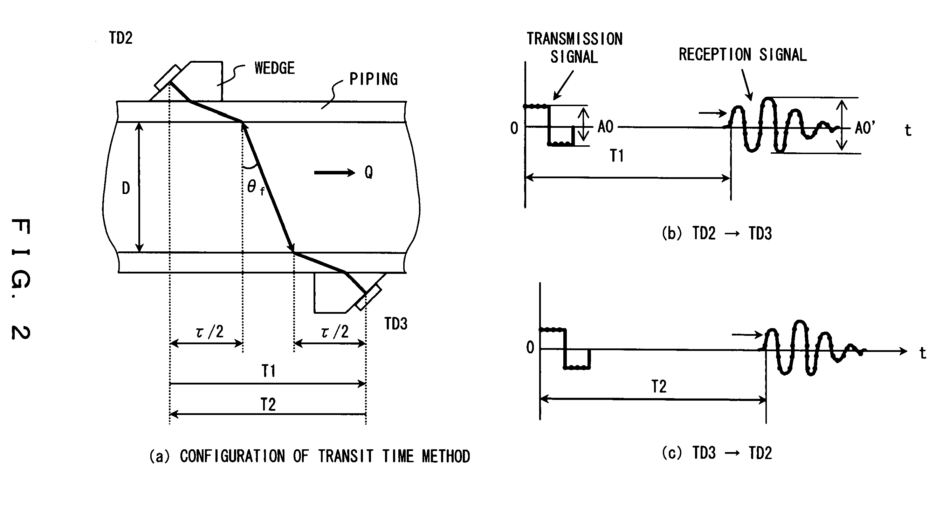

Fig. 2 shows the principle of the flow rate measurement in the transit time method. In the transit time method, as shown in part (a) of Fig. 2, the transducer 2 (referred to as a "TD2" in Fig. 2) transmits ultrasonics (amplitude A0) to a measurement line on the diameter of the fluid to be measured through a wedge and piping, and the transducer 3 receives the ultrasonics by way of the fluid to be measured through the opposite piping and wedge. Part (b) of Fig. 2 shows a reception waveform. Continuously, the transducer 3 similarly performs transmission to the transducer 2. Part (c) of Fig. 2 shows the reception waveform of the TD2. Then, the average velocity of flow of the fluid to be measured is obtained by the time difference ($\Delta T = T2 - T1$) between the reception waveforms of the transducers 2 and 3. The flow rate measurement by the transit time method defines, as "one measurement cycle", the period in which each of a pair of transducers transmits a transmission pulse and the flow rate is measured using both of the reception waves received at this time.

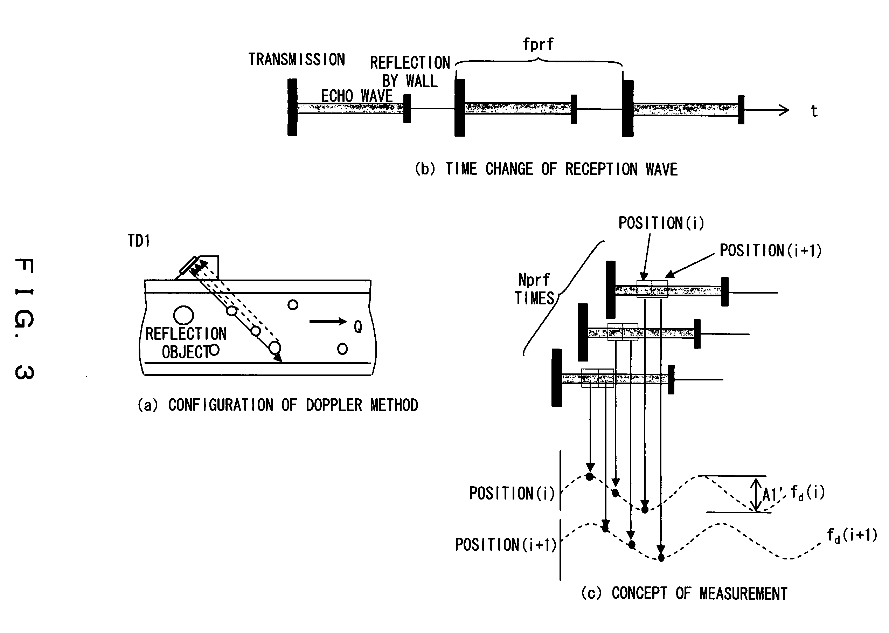

Fig. 3 shows the principle of the flow rate measurement by the pulse Doppler method. In the pulse Doppler method, as shown in part (a) of Fig. 3, the transducer 1 (referred to as a "TD1" in Fig. 3) transmits ultrasonics (amplitude A1) to a measurement area on the diameter of the measurement line through a wedge and piping, and a sensor receives an echo (reflection wave) from the reflection object in the measurement area. The reflection position on the measurement line is calculated based on the time taken from transmission to reception, and the velocity of flow of a reflection object is obtained from the Doppler shift depending on the velocity of the reflection object at each position (measurement point). The above-mentioned process is repeated a predetermined number of times (Nprf) at a frequency of fprf (fprf ≥ 2fd) corresponding to the sampling theorem derived from the frequency (fd) of the Doppler shift, and the flow profile on the measurement line is derived. Then, the flow rate is obtained by integrating each velocity of flow along the inner diameter of the piping. In part (b) of Fig. 3, the thickest vertical line indicates a transmission wave, and the second thickest vertical line indicates the reflection wave from the opposite wall surface. The thick horizontal line connecting these vertical thick lines indicates the echo by a reflection object in the fluid. Relating to the flow rate measurement in the pulse Doppler method, the period of the measuring operation on one pulse transmission is defined as "one measurement cycle".

Based on the results of the above-mentioned Nprf times of measurements, as shown in part (c) of Fig. 3, a Doppler reception wave fd(i) is obtained for each measurement point (position). In this explanation, the reception wave (Doppler reception wave) in the pulse Doppler method refers to an output signal from the circuit 4 or a signal generated based on the results of the Nprf times of measurements, but does not refer to a raw reception wave obtained by each measurement.

To know the velocity of flow, a frequency change in a Doppler shift is to be obtained. However, with the practical measurement device, the phase angle is first calculated using a Doppler shift ωd and a repetitive cycle $\Delta t$, and an arithmetic operation is performed, thereby obtain the velocity of flow.

The switching operation by the method switching unit 10 is explained below based on the above-mentioned definition.

[First Embodiment]

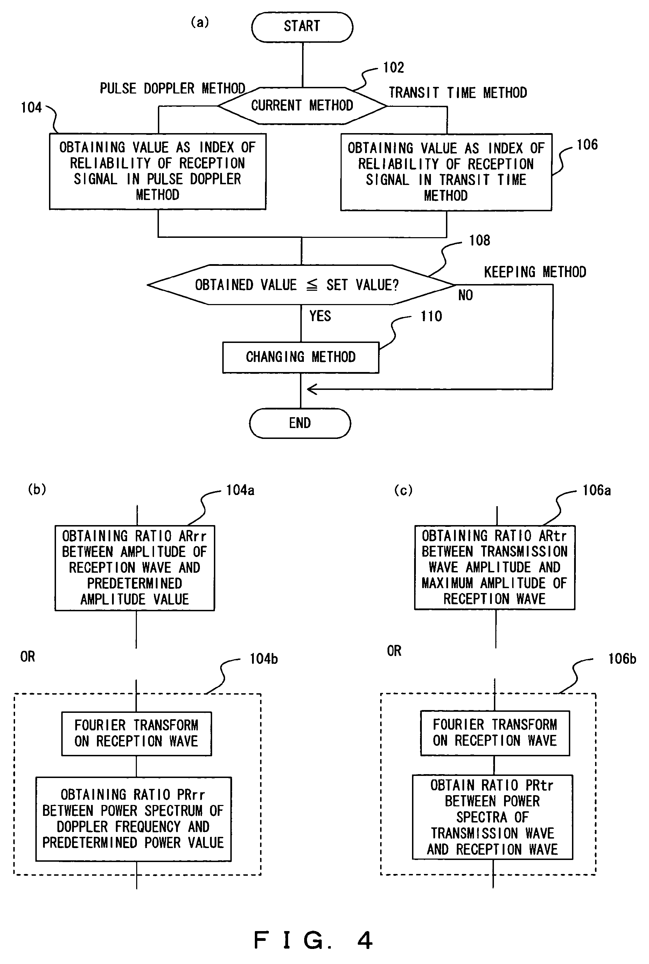

Fig. 4 is a flowchart of the switching operation according to the first embodiment of the present invention. According to the present invention, the process shown in Fig. 4 is performed for each measurement cycle. When the process in part (a) of Fig. 4 starts, what is the current flow rate measuring method is determined (step 102). Since the control unit 7 controls the switch of methods, the control unit 7 naturally knows the current flow rate measuring method. If the current flow rate measuring method is the pulse Doppler method, control is passed to step 104, and a value of an index of the reliability relating to a reception signal(that is, the Doppler reception wave fd(i) shown in part (c) of Fig. 3) generated based on the results of the Nprf times of measurements performed up to now.

Part (b) of Fig. 4 shows a practical example of the process in step 104. As shown by part (b) of Fig. 4, for example, the ratio ARrr of the amplitude of a reception wave, that is, the amplitude A1' of the Doppler reception wave fd(i), to a predetermined amplitude value A is obtained in step 104a.

Otherwise, as in step 104b, a Fourier transform is performed on the Doppler reception wave, the Doppler frequency fd as a difference between the transmission wave frequency and the reception wave frequency is obtained, the power of the reception wave is detected, and these processes are repeated a number of times, thereby obtaining a power spectrum whose horizontal and vertical axes respectively indicate the Doppler frequency fd and the power, and obtaining the ratio PRrr of the obtained power spectrum to a predetermined power value P. The power spectrum is to be obtained for each measurement point.

In the determining step 108, it is determined whether or not the value obtained in step 104 (for example, 104a or 104b) is smaller than a predetermined set value (Q or R). Practically, when the ratio ARrr of the amplitude A1' of the Doppler reception wave fd(i) to a predetermined amplitude value A is obtained in step 104a, it is determined whether or not the ratio ARrr is smaller than the set value Q predetermined for the ratio ARrr. Similarly, when the ratio PRrr is obtained in step 104b, it is determined whether or not the ratio PRrr is smaller than the set value R predetermined for the ratio PRrr.

If the obtained value is smaller than the predetermined set value, the reliability of the Doppler reception wave collected in the measurement cycle is low, and it is recommended that the method is not to be adopted. Accordingly, the method is changed in step 110. That is, in this case, since the pulse Doppler method is currently being used, the method is changed to the transit time method. After step 110, the switching operation terminates.

In the determining step 108, if the value obtained in step 104 is larger than the set value (Q or R), the reliability of the Doppler reception wave collected in the measurement cycle is equal to or higher than a predetermined level. Therefore, no action is taken (the method is not changed) and the process terminates.

The predetermined amplitude value A, the predetermined power value P, and the predetermined set value (Q or R) are optionally set as appropriate values by the user.

On the other hand, if it is determined in the first determining step 102 that the current method is the transit time method, control is passed to step 106, and a value as an index of the reliability of the reception signal collected in the current measurement cycle is obtained. Practically, it is obtained in step 106a or 106b shown in part (c) of Fig. 4. For example, in step 106a, the ratio Artr of the maximum amplitude (A0 shown in part (b) of Fig. 2) of a transmission wave to the maximum amplitude (A0' shown in part (b) of Fig. 2) of a reception wave is obtained. Otherwise, in step 106b, the power spectrum of the transmission frequency contained in the reception wave is calculated by performing a Fourier transform on the reception wave, and the ratio PRtr of the power spectrum to the transmission wave can be obtained.

Then, in the determining step 108, it is determined whether or not the value obtained in step 106 (for example, 106a or 106b) is smaller than the set value for the amount. Practically, when the ratio Artr of the maximum amplitudes of the transmission to that of the reception waves is obtained in step 106a, it is determined whether or not the ratio Artr is smaller than the set value predetermined for the ratio Artr. Similarly, when the power ratio PRtr is obtained in step 106b, it is determined whether or not the ratio PRtr is smaller than the set value predetermined for the ratio PRtr.

If the obtained value is smaller than the predetermined set value, the reliability of the reception wave collected in the measurement cycle is low, and it is recommended that the method is not to be adopted. Therefore, the method is changed in step 110. That is, in this case, since the current method is the transit time method, it is changed to the pulse Doppler method. After step 110, the switching operation terminates.

In the determining step 108, if the value obtained in step 106 is larger than the set value, the reliability of the reception wave in the transit time method collected in the measurement cycle is equal to or higher than a predetermined level. Therefore, no action is taken (the method is not changed) and the process terminates.

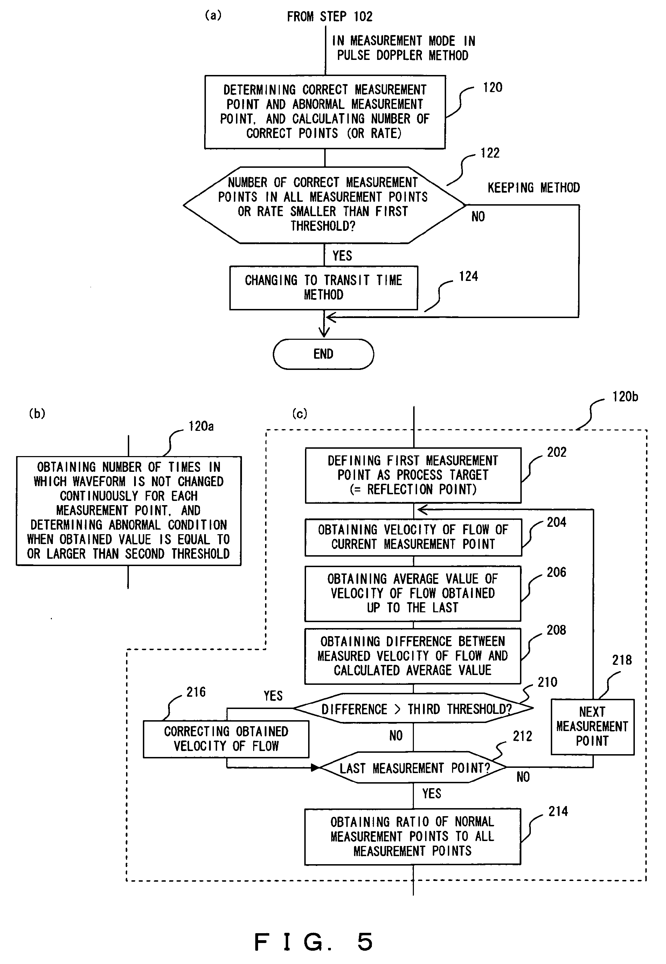

If the current measuring method is the pulse Doppler method, the process shown in Fig. 4 is not performed, but the process shown in Fig. 5 can be performed. That is, as shown in part (a) of Fig. 5, it is determined whether or not the entire measurement points can be correctly measured (step S120). If the number of measurement points in which they can be correctly measured (or if the ratio of the correctly measured points to all measurement points) is smaller than a first predetermined threshold (YES in step S122), then it is determined that the measurement cannot be performed by the pulse Doppler method, and the measuring method is changed to the transit time method (step S124) . If the number is equal to or higher than the first predetermined threshold (NO in step S122), it is determined that the measurement can be performed by the pulse Doppler method, and the process terminates as is (without changing the method).

The determining process in step S120 is practically the process as shown in part (b) of Fig. 5 or the process as shown in part (c) of Fig. 5.

In the process shown in part (b) of Fig. 5, the number of times in which the waveform of the reception wave is not changed continuously is obtained for each measurement point each time the predetermined number of times (for example Nprf times) the measurement is performed. If the number of times is small than a predetermined second threshold, it is determined that the measurement point can be correctly measured (step S120a). On the other hand, if the obtained number of times is equal to or larger than the second predetermined threshold, then it is determined that the measurement status of the measurement point is abnormal. "No change in waveform" in "the number of times in which the waveform of the reception wave is not changed continuously" refers to the following meaning.

That is, in the pulse Doppler method, in which measurement point a reflection object has reflected the received wave can be determined by the time taken from the transmission of an ultrasonic pulse to the reception of the reflected wave. That is, when the reflected wave (reception wave) is seen on the time base, the waveform changes at the time corresponding to the measurement point of the reflection object, and otherwise the waveform is not changed. Therefore, the "waveform of a reception wave is not changed" for a certain measurement point means that no reflection object has passed, and the reflection object has not passed the measurement point during the time corresponding to the "number of times wherein the waveform of the reception wave is not changed continuously". Accordingly, that a large "number of times the waveform of the reception wave is not changed continuously" refers to the implication that there are a small number of reflection objects passing the measurement point. Therefore, when it is equal to or larger than the second threshold, it is determined that a measurement cannot be correctly made.

Described below is the process shown in part (c) of Fig. 5.

The principle of the operation of the process shown in part (c) of Fig. 5 is explained below.

That is, in the flow rate measurement in the pulse Doppler method, the velocity of flow measured in each measurement cycle at each measurement point is not constant, and there is variance indicating a substantially normal distribution.

The velocity of flow at each measurement point is finally output by calculating an average value of measurement results forming the above-mentioned normal distribution. Although there is more or less variance as described above, when there is a large difference between a measurement result and an average value, it can be considered that a correct measurement result cannot be obtained.

Based on the principle of the operation, the process in step S120b shown in part (c) of Fig. 5 is performed. Step S120b is formed by the following substeps. That is, first in step 202, a process target is the first measurement point. In step 204, the velocity of flow at the current measurement point (= reflection point) is obtained. In step 206, the average value out of the flow velocities of the current measurement point obtained up to the last measurement is calculated. In step 208, the difference between the velocity of flow obtained in step 204 and the calculated average value is obtained. In the determining step 210, it is determined whether or not the difference is equal to or larger than the third threshold. If the difference is not higher than the predetermined third threshold, it is determined that the measurement has been correctly performed on the measurement point. The number of measurement points on which it is determined that the measurement has been correctly performed is counted. In the next determining step 212, it is determined whether or not the current measurement point to be processed is the last measurement point. If it is not the last point, then the next measurement point is set as a process target in step 218, and control is returned to step 204. In the determining step 210, when the difference exceeds the third threshold, it is considered that the measurement at the measurement point is abnormal, and in step 216, the velocity of flow obtained in step 204 is corrected using the average value obtained up to the previous time, or an average value, etc. of the adjacent measurement points, and then control is passed to step 212. If the measurement point of the current process target is the last measurement point in the determining step 212, then control is passed to step 214, and the ratio (%) of the number of normal measurement points to the total number of measurement points is obtained. The process in step 214 can be omitted, and the number of the counted normal measurement points can be used as is in the process in step 122.

As described above, when the number of measurement points on which a normal measurement has been performed (or the ratio of it to the total number of measurement points) is obtained, control is passed to determining step 122. In step 122, it is determined whether or not the obtained value exceeds the first threshold. Naturally, different values are set for the first threshold between the case in which the process in step 120a is performed and the case in which the process in 120b is performed.

In the example in step 120b, the velocity of flow at each measurement point is used as a determination standard. However, since there is variance making substantially a normal distribution with the Doppler shift at each point as with the velocity of flow, the Doppler shift at each measurement point can be used for a determination standard in step 120b.

The first, second, and third thresholds are appropriate values optionally set by a user.

According to the present invention, a high-precision flow rate measurement adaptive to measurement conditions can be performed by selecting the optimum flow rate measuring method during the flow rate measurement as described above.

The method of switching the measuring methods is realized by determining the switch using the received data of only either one of measuring method currently used. Described below is the method of determining the switch based on the measurement data of both methods.

[Second Embodiment]

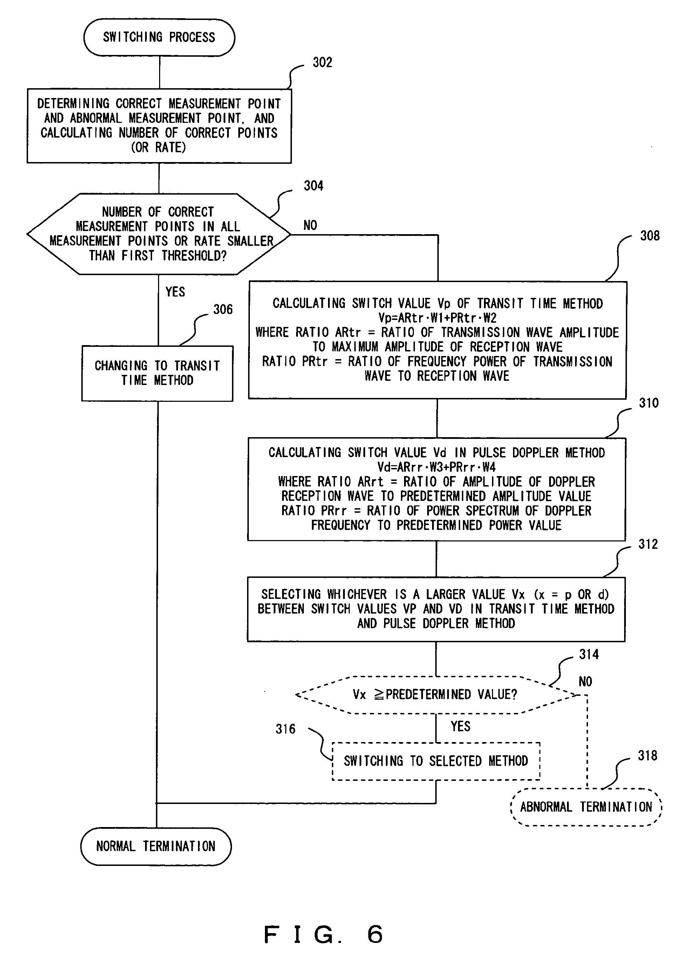

Fig. 6 is a flowchart of the switching operation according to the second embodiment. The process shown in Fig. 6 performs first the steps 302 and 304. The process in step 302 is the same as the process in step 120a shown in part (b) of Fig. 5, and the process in step 304 is the same as the process in step 122 in part (a) of Fig. 5. When the determination in step 304 (122) is YES, it is determined that the measurement cannot be performed in the pulse Doppler method, and the method is switched to the transit time method (step 306), thereby terminating the process. However, when the determination in step 304 (122) is NO, it is not immediately determined that the pulse Doppler method is to be continued, but it is determined in steps 308 through 318 which is more appropriate, the pulse Doppler method or the transit time method, and the more appropriate method is adopted. If both of them are inappropriate, it is determined there is a certain abnormal condition.

In the example shown in Fig. 6, the process in step 120a shown in part (b) of Fig. 5 is used, but the process in step 120b shown in part (c) of Fig. 5 can also be used. Otherwise, the example shown in Fig. 6 is based on the pulse Doppler method as the current measuring method, but the method is not limited to the pulse Doppler method, and the determination in step 102 shown in part (a) of Fig. 4 is performed. When the current measuring method is the transit time method, the process in step 302 can be replaced with the process in step 106 (for example, step 106a or 106b shown in (c) of Fig. 4). In this case, if the determination in step 304 is YES, the process in step 306 is "switching to the pulse Doppler method".

When the determination in step 304 is NO, control is passed to step 308. In step 308, the switch value Vp in the transit time method defined by the following equation is calculated.

$$Vp = ARtr \cdot W1 + PRtr \cdot W2$$

where:

Artr = ratio of the transmission wave amplitude to the maximum amplitude of a reception wave;
PRtr = ratio of the frequency power of a transmission wave to a reception wave; and
W1, W2 are arbitrarily set weight values.

In step 310, the switch value Vd in the Doppler method defined by the following equation is calculated.

$$Vd = ARrr \cdot W3 + PRrr \cdot W4$$

where:

ARrr = ratio of the amplitude of a Doppler reception wave to a predetermined amplitude value;
ratio PRrr = ratio of a power spectrum of a Doppler frequency to a predetermined power value; and
W3, W4 are arbitrarily set weight values.

The above-mentioned W1 and W2 are arbitrarily set by a user depending on which prime importance is placed, ARtr or PRtr. When only one of ARtr and PRtr is to be used, the settings of W1 = 0, W2 = 0, etc. can be performed. The same holds true with W3 and W4.

In step 312, whichever larger is selected as Vx (x = p or d), the switch value Vp in the transit time method or the switch value Vd in the pulse Doppler method. In the determining step 314, it is determined whether or not the selected value Vx is larger than a predetermined value. If the selected value Vx is larger, the method is switched to the method selected in step 316, thereby terminating the process. If the selected value Vx is not larger than the predetermined value in step 314, it is determined that the measurement cannot be performed, and the information of the result is issued in step 318, thereby terminating the process.

The ultrasonic flowmeter capable of applying the two methods according to the present embodiment can be, for example, as described in Japanese Patent Application No. 2004-052348, an ultrasonic flowmeter capable of selectively applying the two methods and an ultrasonic flowmeter capable of simultaneously applying the two methods. An ultrasonic flowmeter capable of selectively applying the two methods can perform measurement by one of the two methods. An ultrasonic flowmeter capable of simultaneously applying the two methods can constantly perform measurement by both methods, but adopt and output a measurement result of one of the two methods.

The method of switching measuring methods according to the second embodiment determines the switch based on the measurement data of the pulse Doppler method and the transit time method. Therefore, it can be applied to the ultrasonic flowmeter capable of simultaneously applying the two methods, but cannot be applied to the ultrasonic flowmeter capable of selectively applying the two methods. On the other hand, the switching method according to the first embodiment determines the switch using the measurement data of one of the two methods. Therefore, it can be applied to any ultrasonic flowmeter capable of applying the two methods independent of ultrasonic flowmeter capable of simultaneously or selectively applying the two methods.

The embodiments above are described only for explanation of the present invention. Therefore, it is easy for those skilled in the art to change, amend or add the descriptions to the above-mentioned embodiments in various manners within the technical concept or principle of the present invention.

For example, the processes in steps 104a and 104b are described as an example of the process in step 104 shown in Fig. 4. However, in step 104, the value of index of reliability of a reception signal is not limited to the example. For example, in step 104a, the ratio ARrr of the amplitude of a reception wave to a predetermined measurable amplitude value is obtained, but the amplitude value of a reception wave itself can be used. In this case, in step 108, it is determined whether or not the amplitude value of a reception wave is smaller than a reference amplitude value (for example, the smallest acceptable amplitude value of a reception wave in the pulse Doppler method). It is also applied to the process in step 106.

In steps 104a, 104b, 106a, and 106b, the ratios are obtained to reduce the influence of the change of the status of a reception wave by a change in voltage due to generation of a transmission pulse, in gain for the amplification of a reception wave, in status in piping, etc. Therefore, the amplitude value itself, not the ratio ARrr can be used as in the case of the above-mentioned amplitude value.

The process in step 104 shown in part (a) of Fig. 4 is explained above as the process in step 104a or 104b shown in part (b) of Fig. 4. However, it can also be performed as the process in step 310 shown in Fig. 6. Similarly, the process in step 106 shown in part (a) of Fig. 4 is explained above as the process in step 106a or 106b shown in part (c) of Fig. 4. However, it can also be performed as the process in step 308 shown in Fig. 6. On the other hand, the processes in steps 104a or 104b shown in part (b) of Fig. 4 replacing the process in step 310 in Fig. 6 can be performed. Similarly, the processes in steps 106a or 106b shown in part (c) of Fig. 4 replacing the process in step 308 in Fig. 6 can be performed. That is, the above-mentioned switch values Vp and Vd are only examples of the values as indexes of the reliability of a reception wave, and other appropriate values can also be applied.

**Claims**

1. A method of selecting a measuring method by selecting one of two measuring methods for use in an ultrasonic flowmeter capable of applying both a pulse Doppler method for a flow rate measurement and a transit time method for a flow rate measurement, comprising:

   a determining step of determining a current measuring method;
   a determining step of determining reliability of a reception wave; and
   a selecting step of selecting a measuring method different from the current measuring method when it is determined that the reliability of the reception wave is insufficient.

2. The method according to claim 1, wherein:

   the determining step comprises:

      a step of obtaining a value as an index of reliability of the reception wave; and
      a step of determining whether or not the value as the index is smaller than a registered set value; and

   the selecting step comprises a step of determining that reliability is not sufficient when the value as the index is smaller than the set value.

3. The method according to claim 2, wherein:

   when the current measuring method determined in the determining step is the pulse Doppler method, the value as the index is an amplitude value of the reception wave; and
   the set value is a smallest acceptable amplitude value of a reception wave in the pulse Doppler method.

4. The method according to claim 2, wherein:

   when the current measuring method determined in the determining step is the pulse Doppler method, the value as the index is a ratio of an amplitude value of a reception wave to a predetermined amplitude value set in advance; and
   the set value is associated with the ratio.

5. The method according to claim 2, wherein:

   when the current measuring method determined in the determining step is the pulse Doppler method, the value as the index is a power spectrum of a Doppler frequency obtained by performing a Fourier transform on the reception wave; and
   the set value is a predetermined power value.

6. The method according to claim 2, wherein:

   when the current measuring method determined in the determining step is the pulse Doppler method, the value as the index is a ratio of a power spectrum of a Doppler frequency obtained by performing a Fourier transform on the reception wave to a predetermined power value; and
   the set value is associated with the ratio.

7. The method according to claim 2, wherein:

   when the current measuring method determined in the determining step is the transit time method, the value as the index is a ratio of a transmission wave amplitude to a maximum amplitude of the reception wave; and
   the set value is associated with the ratio.

8. The method according to claim 2, wherein:

   when the current measuring method determined in the determining step is the transit time method, the value as the index is a ratio of a power spectrum of a transmission frequency contained in the reception wave obtained by performing a Fourier transform on the reception wave to a predetermined power value; and

the set value is associated with the ratio.

9. The method according to claim 1, wherein:

   when the current measuring method determined in the determining step is the pulse Doppler method, the determining step determines a measurement point in a status in which a measurement can be correctly performed at present, and counts the number of the correct measurement points: and
   the selecting step changes the method to the transit time method when the obtained number of correct measurement points is smaller than a first threshold registered in advance.

10. The method according to claim 9, wherein
    the determining step obtains the number of times in which a waveform of the reception wave is not changed continuously for each measurement point, and determines as the correct measurement point a measurement point at which the obtained number of times is smaller than a predetermined second threshold.

11. The method according to claim 9, wherein
    The determining step obtains a current velocity of flow for each measurement point, obtains an average value of velocity of flow obtained up to the last time, obtains a difference between the obtained current velocity of flow and the average value, determines whether or not the difference is smaller than a predetermined third threshold, and defines a measurement point having the difference smaller than the predetermined third threshold as the correct measurement point.

12. The method according to claim 9, wherein
    the determining step obtains a Doppler shift based on the reception wave for each measurement point, obtains an average value of Doppler shifts obtained up to the last time, obtains a difference between the obtained Doppler shift and the average value, and defines a measurement point having the difference smaller than a predetermined fourth threshold as the correct measurement point.

13. A method of selecting a measuring method by selecting one of two measuring methods for use in an ultrasonic flowmeter capable of applying both a pulse Doppler method for a flow rate measurement and a transit time method for a flow rate measurement, comprising:

    a determining step of determining a current measuring method;
    a determining step of determining reliability of a reception wave; and

a selecting step of selecting a measuring method different from the current measuring method when it is determined that the reliability of the reception wave is insufficient, and when it is determined that the reliability of the reception wave is sufficient, obtaining a value as an index of reliability of a reception wave in each of the pulse Doppler method and the transit time method, comparing the values as the indexes of the two measuring methods, and selecting a measuring method having a larger value as the index.

14. The method according to claim 13, wherein
    a value as an index of reliability of a reception wave in the transit time method is a weighted and added value between a ratio between a transmission wave amplitude and a maximum amplitude of a reception wave and a ratio between frequency power of a transmission wave and a reception wave.

15. The method according to claim 13, wherein
    a value as an index of reliability of a reception wave in the pulse Doppler method is a weighted and added value of a ratio of an amplitude of a reception wave to a predetermined amplitude value, and a ratio of a power spectrum of a Doppler frequency to a predetermined power value.

16. The method according to claim 13, wherein
    the method selecting step further comprises:

    a step of determining whether or not a value of the index having a larger value as a result of the comparison is larger than a predetermined value; and
    a step of outputting information about abnormality when the value is smaller than the predetermined value.

17. An ultrasonic flowmeter capable of applying both a pulse Doppler method for a flow rate measurement and a transit time method for a flow rate measurement, comprising:

    a determination unit determining a current measuring method;
    a determination unit determining reliability of a reception wave; and
    a selection unit selecting a measuring method different from the current measuring method when it is determined that the reliability of the reception wave is insufficient.

18. An ultrasonic flowmeter capable of applying both a pulse Doppler method for a flow rate measurement and a transit time method for a flow rate measurement, comprising:

a determination unit determining a current measuring method;

a determination unit determining reliability of a reception wave; and

a selection unit selecting a measuring method different from the current measuring method when it is determined that the reliability of the reception wave is insufficient, and when it is determined that the reliability of the reception wave is sufficient, obtaining a value as an index of reliability of a reception wave in each of the pulse Doppler method and the transit time method, comparing the values as the indexes of the two measuring methods, and selecting a measuring method having a larger value as the index.

19. A computer-readable recording medium storing a program used to direct a computer of an ultrasonic flowmeter capable of applying both a pulse Doppler method for a flow rate measurement and a transit time method for a flow rate measurement to realize:

a function of determining a current measuring method;

a function of determining reliability of a reception wave; and

a selecting function of selecting a measuring method different from the current measuring method when it is determined that the reliability of the reception wave is insufficient.

20. A computer-readable recording medium storing a program used to direct a computer of an ultrasonic flowmeter capable of applying both a pulse Doppler method for a flow rate measurement and a transit time method for a flow rate measurement to realize:

a function of determining a current measuring method;

a function of determining reliability of a reception wave; and

a function of selecting a measuring method different from the current measuring method when it is determined that the reliability of the reception wave is insufficient, and when it is determined that the reliability of the reception wave is sufficient, obtaining a value as an index of reliability of a reception wave in each of the pulse Doppler method and the transit time method, comparing the values as the indexes of the two measuring methods, and selecting a measuring method having a larger value as the index.

21. A program used to direct a computer of an ultrasonic flowmeter capable of applying both a pulse Doppler method for a flow rate measurement and a transit time method for a flow rate measurement to realize:

a function of determining a current measuring method;

a function of determining reliability of a reception wave; and

a selecting function of selecting a measuring method different from the current measuring method when it is determined that the reliability of the reception wave is insufficient.

22. A program used to direct a computer of an ultrasonic flowmeter capable of applying both a pulse Doppler method for a flow rate measurement and a transit time method for a flow rate measurement to realize:

a function of determining a current measuring method;

a function of determining reliability of a reception wave; and

a function of selecting a measuring method different from the current measuring method when it is determined that the reliability of the reception wave is insufficient, and when it is determined that the reliability of the reception wave is sufficient, obtaining a value as an index of reliability of a reception wave in each of the pulse Doppler method and the transit time method, comparing the values as the indexes of the two measuring methods, and selecting a measuring method having a larger value as the index.

23. An electronic device for use with an ultrasonic flowmeter capable of applying both a pulse Doppler method for a flow rate measurement and a transit time method for a flow rate measurement, comprising:

a determination unit determining a current measuring method;

a determination unit determining reliability of a reception wave; and

a selection unit selecting a measuring method different from the current measuring method when it is determined that the reliability of the reception wave is insufficient.

CONTROL UNIT (MICROCOMPUTER)

9 — OUTPUT PROCESSING UNIT

8 — FLOW RATE CALCULATING UNIT

METHOD SWITCHING UNIT — 10

7

6

A/D CONVERSION
↑
DETECTING DOPPLER FREQUENCY — 4

A/D CONVERSION
↑
AMPLITUDE — 5

1    RECEPTION WAVE (ECHO)

2    RECEPTION WAVE

PIPING

Q

THE TRANSDUCER 1 CAN BE THE SAME AS THE TRANSDUCER 2.

3

F I G. 1

(a) CONFIGURATION OF TRANSIT TIME METHOD

(b) TD2 → TD3

(c) TD3 → TD2

F I G. 2

EP 1 719 979 A1

F I G. 3

TRANSMISSION
ECHO WAVE

REFLECTION
BY WALL

fprf

(b) TIME CHANGE OF RECEPTION WAVE

t

TD1

REFLECTION
OBJECT

Q

(a) CONFIGURATION OF DOPPLER METHOD

POSITION(i)

POSITION(i+1)

Nprf
TIMES

POSITION(i)

A1, $f_d(i)$

POSITION(i+1)

$f_d(i+1)$

(c) CONCEPT OF MEASUREMENT

13

(a)

START

102

PULSE DOPPLER METHOD — CURRENT METHOD — TRANSIT TIME METHOD

104

OBTAINING VALUE AS INDEX OF RELIABILITY OF RECEPTION SIGNAL IN PULSE DOPPLER METHOD

106

OBTAINING VALUE AS INDEX OF RELIABILITY OF RECEPTION SIGNAL IN TRANSIT TIME METHOD

108

OBTAINED VALUE ≦ SET VALUE?

KEEPING METHOD

NO

YES

110

CHANGING METHOD

END

(b)

104a

OBTAINING RATIO ARrr BETWEEN AMPLITUDE OF RECEPTION WAVE AND PREDETERMINED AMPLITUDE VALUE

OR

104b

FOURIER TRANSFORM ON RECEPTION WAVE

OBTAINING RATIO PRrr BETWEEN POWER SPECTRUM OF DOPPLER FREQUENCY AND PREDETERMINED POWER VALUE

(c)

106a

OBTAINING RATIO ARtr BETWEEN TRANSMISSION WAVE AMPLITUDE AND MAXIMUM AMPLITUDE OF RECEPTION WAVE

OR

106b

FOURIER TRANSFORM ON RECEPTION WAVE

OBTAIN RATIO PRtr BETWEEN POWER SPECTRA OF TRANSMISSION WAVE AND RECEPTION WAVE

F I G.  4

(a)

FROM STEP 102

IN MEASUREMENT MODE IN
PULSE DOPPLER METHOD

DETERMINING CORRECT MEASUREMENT
POINT AND ABNORMAL MEASUREMENT
POINT, AND CALCULATING NUMBER OF
CORRECT POINTS (OR RATE) — 120

NUMBER OF CORRECT MEASUREMENT
POINTS IN ALL MEASUREMENT POINTS
OR RATE SMALLER THAN FIRST
THRESHOLD? — 122

KEEPING METHOD

NO

YES

CHANGING TO TRANSIT TIME
METHOD — 124

END

(b)

OBTAINING NUMBER OF TIMES IN
WHICH WAVEFORM IS NOT CHANGED
CONTINUOUSLY FOR EACH
MEASUREMENT POINT, AND
DETERMINING ABNORMAL CONDITION
WHEN OBTAINED VALUE IS EQUAL TO
OR LARGER THAN SECOND THRESHOLD — 120a

(c)

120b

DEFINING FIRST MEASUREMENT
POINT AS PROCESS TARGET
(= REFLECTION POINT) — 202

OBTAINING VELOCITY OF FLOW OF
CURRENT MEASUREMENT POINT — 204

OBTAINING AVERAGE VALUE OF
VELOCITY OF FLOW OBTAINED
UP TO THE LAST — 206

OBTAINING DIFFERENCE BETWEEN
MEASURED VELOCITY OF FLOW AND
CALCULATED AVERAGE VALUE — 208

210

YES

DIFFERENCE > THIRD THRESHOLD? — 216

CORRECTING OBTAINED
VELOCITY OF FLOW

NO

212

LAST MEASUREMENT POINT?

NO

NEXT
MEASUREMENT
POINT — 218

YES

OBTAINING RATIO OF NORMAL
MEASUREMENT POINTS TO ALL
MEASUREMENT POINTS — 214

# F I G.   5

SWITCHING PROCESS

302
DETERMINING CORRECT MEASUREMENT POINT AND ABNORMAL MEASUREMENT POINT, AND CALCULATING NUMBER OF CORRECT POINTS (OR RATE)

304
NUMBER OF CORRECT MEASUREMENT POINTS IN ALL MEASUREMENT POINTS OR RATE SMALLER THAN FIRST THRESHOLD?

NO

YES

306
CHANGING TO TRANSIT TIME METHOD

308
CALCULATING SWITCH VALUE Vp OF TRANSIT TIME METHOD
$V_p = AR_{tr} \cdot W1 + PR_{tr} \cdot W2$
WHERE RATIO $AR_{tr}$ = RATIO OF TRANSMISSION WAVE AMPLITUDE TO MAXIMUM AMPLITUDE OF RECEPTION WAVE
RATIO $PR_{tr}$ = RATIO OF FREQUENCY POWER OF TRANSMISSION WAVE TO RECEPTION WAVE

310
CALCULATING SWITCH VALUE Vd IN PULSE DOPPLER METHOD
$V_d = AR_{rr} \cdot W3 + PR_{rr} \cdot W4$
WHERE RATIO $AR_{rt}$ = RATIO OF AMPLITUDE OF DOPPLER RECEPTION WAVE TO PREDETERMINED AMPLITUDE VALUE
RATIO $PR_{rr}$ = RATIO OF POWER SPECTRUM OF DOPPLER FREQUENCY TO PREDETERMINED POWER VALUE

312
SELECTING WHICHEVER IS A LARGER VALUE Vx (x = p OR d) BETWEEN SWITCH VALUES VP AND VD IN TRANSIT TIME METHOD AND PULSE DOPPLER METHOD

314
$Vx \geqq$ PREDETERMINED VALUE?

NO

YES

316
SWITCHING TO SELECTED METHOD

318
ABNORMAL TERMINATION

NORMAL TERMINATION

F I G. 6

<table>
<tr><td colspan="2"><b>INTERNATIONAL SEARCH REPORT</b></td><td>International application No.<br>PCT/JP2005/003198</td></tr>
</table>

| A. CLASSIFICATION OF SUBJECT MATTER |
|---|
| Int.Cl$^7$ G01F1/66, 7/00 |

According to International Patent Classification (IPC) or to both national classification and IPC

| B. FIELDS SEARCHED |
|---|
| Minimum documentation searched (classification system followed by classification symbols)<br>Int.Cl$^7$ G01F1/00-9/02 |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2002-340644 A  (Hironari KIKURA),<br>27 November, 2002 (27.11.02),<br>Claims 1, 3; Figs. 1, 2<br>(Family: none) | 1-23 |
| A | JP 11-237264 A  (Kaijo Corp.),<br>31 August, 1999 (31.08.99),<br>Fig. 3<br>(Family: none) | 1-23 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 April, 2005 (25.04.05) | Date of mailing of the international search report<br>17 May, 2005 (17.05.05) |
|---|---|
| Name and mailing address of the ISA/<br>Japanese Patent Office | Authorized officer |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000097742 A
- JP 2004052348 A